# EUROPEAN PATENT APPLICATION

(11) **EP 3 174 252 A1**
(43) Date of publication of application: **31.05.2017**
(21) Application number: 15306880.4
(22) Date of filing: 26.11.2015
(51) Int. Cl.: H04L 12/403, G06F 13/42, H04L 12/40

(54) **COMMUNICATION SYSTEM**

(71) Applicant: GEMALTO SA, 92190 Meudon (FR)
(72) Inventor: ANTOINE, Matthieu, 92190 Meudon (FR); GOLCHHA, Vineet Kumar, 92190 Meudon (FR); MANLOSA, Thérésa Joy Tan, 92190 Meudon (FR)
(74) Representative: Cassagne, Philippe M.J.

(57) **Abstract**

The invention relates to a SPI bus having a feedback from the slave 250 device. A master device 200 is connected to slave device through CLK, MISO, MOSI and NSS, NSS being the selection wire. Data transmission is made like a convention SPI bus. The NSS ports of the slave and the master are bi-directional tri-state ports linked together by a wire connected to at least one pull-up resistor. The master and slave selection ports are capable to receive and to send synchronization information. The slave device 250 can drive the slave selection port NSS to low level while the master selection port is in high impedance for signaling to the master a status of the slave. The invention focus the method, the slave device, the master device and the system including the slave device and the master device.

## Description

### Field of the Invention:

The invention relates to a communication system and more particularly to a system using a four-wire bus for communicating serially in full duplex.

### Background of the Invention:

Today, many systems are known for communicating between two devices. Each system has its advantages and its drawbacks. Amongst the different systems, the SPI bus is a well known bus that enables to exchange data or commands between two devices which are integrated circuits or chips. The SPI is commonly implemented with one master device and one or more slave device(s).

Typically, SPI bus comprises one wire dedicated for the clock, one wire for data from the master to the slave, one wire for data from the slave to the master. Additionally when several slave devices are used, there are additional wires of selection, one per slave, that enable the master to select the slave device for the communication. As an example, EP1553731 shows an example of use of a SPI bus using one master device and two slave devices.

In the world of microcontroller, it is known to have programmable SPI interface wherein the select port is a three states port. In that case, it is necessary to define if the microcontroller will be used as a master device or as a slave device. Depending on the choice of configuration, the microcontroller will work either in master mode or in slave mode, or in other words the select port will work either as an output or as an input.

SPI bus is well adapted for many uses and can be the default communication interface for some devices. Nevertheless the SPI bus and its protocol have several drawbacks. A first drawback is that the master device never knows if the slave device is ready for receiving a data packet. For avoiding such a drawback it is necessary to have a slave device which is faster than the master device in such a way whatever the situation the slave device is always ready for receiving. If the slave device is a processing device, such an over-sizing could be very expensive. Another drawback is that only the master device can decide when a message can be exchanged. If a slave device can have asynchronously a message to transmit to master device, it is necessary to implement a polling mechanism in which the master device checks regularly if the slave device has something to transmit. Such a polling mechanism can be expensive in term of current consumption.

### Summary of the Invention:

The invention proposes an alternative to the SPI bus for preventing to oversize slave device. The proposed alternative is to have a feedback from the slave device to know exactly if the packet is received. The invention is a communication method for system that comprises a master device and a slave device. The master device comprises a clock output for providing a clock signal, a master input for receiving a data signal, a master output for providing a data signal, a master selection port for providing synchronization information. The slave device comprises a clock input for receiving a clock signal, which is connected to the clock output, a slave input for receiving a data signal, the slave input being connected to the master output, a slave output for providing a data signal, the slave output being connected to the master input, a slave selection port for receiving synchronization information, the slave selection port being connected to the master selection port. The sending of data through master and slave output and the receiving of data through master and slave input can be perform when the master drives the master selection port at low level while sending clock pulses on the clock signal for sequencing the data exchange. The master and slave selection ports are bi-directional tri-state ports linked together by a wire connected to at least one pull-up resistor, each of the master and slave selection port being capable to receive and to send synchronization information and wherein the slave device can drive the slave selection port to low level while the master selection port is in high impedance for signaling to the master a status of the slave.

Different roles can be defined for the status reporting made by the slave. The status may indicate the slave is ready after at least a first reception of command/data for receiving next command/data. The master selection port may be driven low before a transmission for indicating to the slave that a command/data wait to be transmitted and wherein the status may indicate the slave is ready for receiving the command/data. The status may indicate to the master that the slave has a message to transmit.

The invention is also a communication system that comprises a master device and a slave device. The master device comprises a clock output for providing a clock signal, a master input for receiving a data signal, a master output for providing a data signal, a master selection port for providing synchronization information. The slave device comprises a clock input for receiving a clock signal, which is connected to the clock output, a slave input for receiving a data signal, the slave input being connected to the master output, a slave output for providing a data signal, the slave output being connected to the master input, a slave selection port for receiving synchronization information, the slave selection port being connected to the master selection port. The sending of data through master and slave output and the receiving of data through master and slave input can be perform when the master drives the master selection port at low level while sending clock pulses on the clock signal for sequencing the data exchange. The master and slave selection ports are bi-directional tri-state ports linked together by a wire connected to at least one pull-up resistor, each of the master and slave selection port being capable to receive and to send synchronization information and wherein the slave device can drive the slave selection port to low level while the master selection port is in high impedance for signaling a status of the slave to the master.

Preferentially, each tri-state port of master an slave device may comprise an amplifier with an input connected to the wire for reading the logical level carried by the wire and an open drain output capable of driven low the logical value carried by the wire. The signaling may be understood by the master when the low level is detected. The signaling may be understood by the master when a transition from low level to high level is detected.

The invention is also related to each part of the system. So the invention is also a master device intended to communicate with a slave device. The master device comprises a clock output for providing a clock signal to the slave device, a master input for receiving a data signal from the slave device, a master output for providing a data signal to the slave device, a master selection port for providing synchronization information to the slave device. The sending of data by the master output and the receiving of data by the master input can be perform when the master drives the master selection port at low level while sending clock pulses on the clock signal for sequencing the data exchange. The master selection ports is a bi-directional tri-state port connected to at least one pull-up resistor, the master selection port being capable to receive and to send synchronization information and wherein while the master selection port is high impedance level, the master selection port can receive information for signaling a status of the slave.

Reciprocally the invention is also a slave device intended to communicate with a master device. The slave device comprises a clock input for receiving a clock signal from the master device, a slave input for receiving a data signal from the master device, a slave output for providing a data signal to the master device, a slave selection port for receiving synchronization information from the master device. The sending by slave output and the receiving of data by the slave input can be perform when the selection port is driven at low level by the master device while receiving clock pulses on the clock signal for sequencing the data exchange. The slave selection port is bi-directional tri-state port connected to at least one pull-up resistor, the slave selection port being capable to drive the slave selection port to low level for signaling a status of the slave to the master.

### Brief Description of the Drawings:

The invention will be better understood after the reading of the following Description of the Preferred Embodiments that makes references to the annexed drawings in which:
Figure 1 shows a timing diagram of the signal used in a SPI bus according to prior art
Figure 2 shows details of the physical interface according to the invention,
Figures 3 to 8 show timing diagram of different examples and realization mode of the invention,
Figure 9 shows an example of state machine for the master device according the invention.

### Description of the Preferred Embodiments:

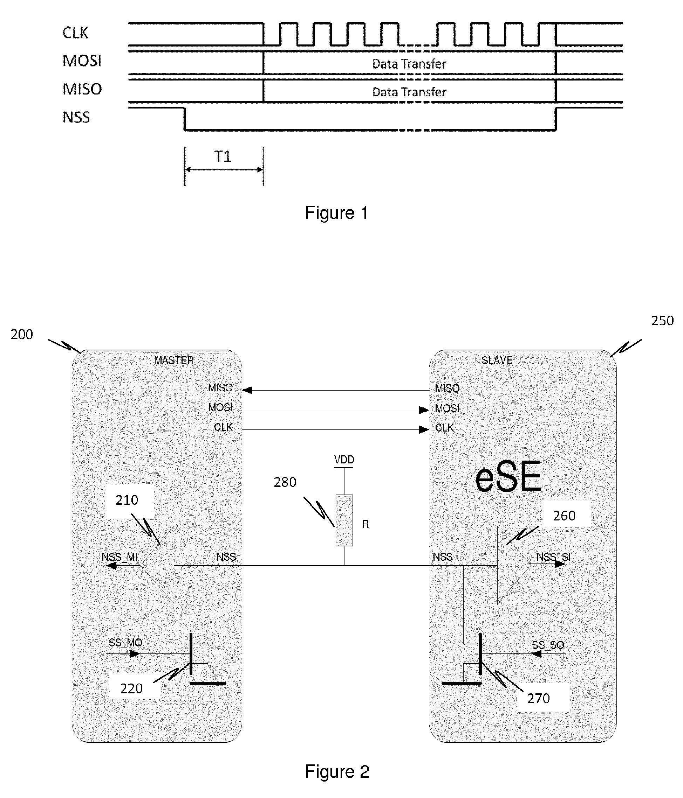

Before describing the invention, a timing diagram of a conventional SPI Bus is detailed on figure 1. A conventional SPI bus comprises a first wire for carrying a clock signal CLK, the clock signal is provided by a master device 200 and can be stopped when there is no data exchange. A first data wire carries a first data signal MOSI from Master device Output to Slave device Input. A second data wire carries a second data signal MISO from Slave device Output to Master device Input. A selection wire carries a negative selection signal NSS which is active at low level.

The SPI is under the control of the master device 200. When the master device 200 wants to exchange data with a slave device 250, the master device 200 first drives selection signal NSS to low level and launch the sending of clock pulses after a small time delay T1 and the data are at the same time sent and received through the output and input ports corresponding to signals MOSI and MISO. The exchange of data is made by packets simultaneously in the two directions; the slave must be always ready for receiving the data. In addition, if a command is sent to the slave and if the command needs an answer from the slave the timing for the answer from the slave device 250 is managed by the master device 200.

As explained before some drawbacks may arrive. A first problem corresponds to a busy status or a not-ready status of the slave. If the slave device 250 has not enough time for emptying the input buffer, the writing of new data may cause a data crushing. If a command sent to the slave device 250 needs a certain amount of time that is unknown from the master device 200, the master device 200 will perform some unnecessary exchanges of data just for reading an empty output buffer.

As introduced before, the invention transforms the selection signal NSS in a bidirectional selection signal NSS that will be driven and read by the master device 200 and the slave device 250. The Figure 2 shows a diagram of a communication system comprising a master device 200 and a slave device 250 link together through a SPI bus modified according to the invention.

The master device 200 comprise a clock output providing the clock signal CLK, a master data input receiving data signal MISO, a master data output providing data signal MOSI and a selection port for receiving and providing the selection signal NSS. The selection port is a bidirectional port. The master device 200 comprises an amplifier 210 having an input receiving the selection signal NSS in such a way the master can read the logical value NSSMI carried by the selection signal NSS. The master device 200 comprises a transistor 220 mounted in open drain, i.e. with its drain connected to the selection port, its source connected to the ground and receiving a command signal SSMO on its gate.

The slave device 250 comprise a clock input receiving the clock signal CLK, a slave data input receiving data signal MOSI, a slave data output providing data signal MISO and a selection port for receiving and providing the selection signal NSS. The selection port is a bidirectional port. The slave device 250 comprises an amplifier 260 having an input receiving the selection signal NSS in such a way the slave device 250 can read the logical value NSSSI carried by the selection signal NSS. The slave device 250 comprises a transistor 270 mounted in open drain, i.e. with its drain connected to the selection port, its source connected to the ground and receiving a command signal SSSO on its gate.

The selection ports of the slave device 250 and of the master device 200 are linked together to at least one pull-up resistor 280. The selection signal NSS is active at low level. The pull-up resistor 280 maintains the selection signal NSS to high level when the transistors 220 and 270 are not active. When a signal has to be sent by the master device 200 or the slave device 250 the device has to drive the selection signal NSS to low level by mean of its out transistor 220 or 270. The selection signal NSS becomes a NOR function on the signals SSMO and SSSO. At the same time each device can read the logical level of the selection signal NSS and can detect when the other device drive the signal to low level. With such a mechanism, it becomes possible for the slave device 250 to report its status to the master device 200.

The use of open drain for driving the NSS signal to low level is a preferred solution because it is the easiest to implement for make such a NOR function on the NSS signal. Any other kind of three-state output can replace the open drain. Nevertheless, considering that the pull-up resistor is necessary to maintain an inactive state (high level) while the outputs are both in high impedance, it is not necessary to have a driving of the signal to high level. So a simple open drain (or open collector) stage is sufficient.

Regarding the pull-up resistor, only one is used on the drawing but it is possible to use more pull-up resistor. As well known in the art, some pull-up resistor can be integrated in the output port of IC. In the case we face two IC outputs with integrated pull-up resistor, we may have two pull-up resistor. Whatever the number of pull-up resistors, there is no change for the invention.

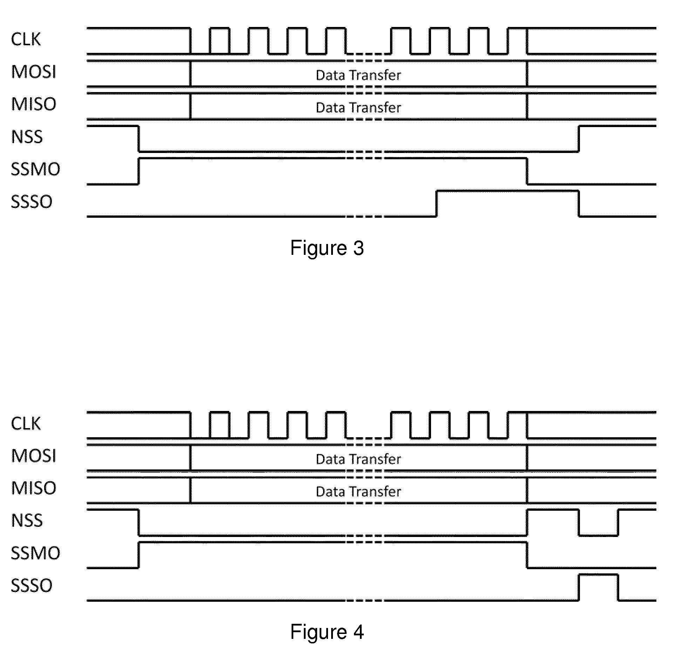

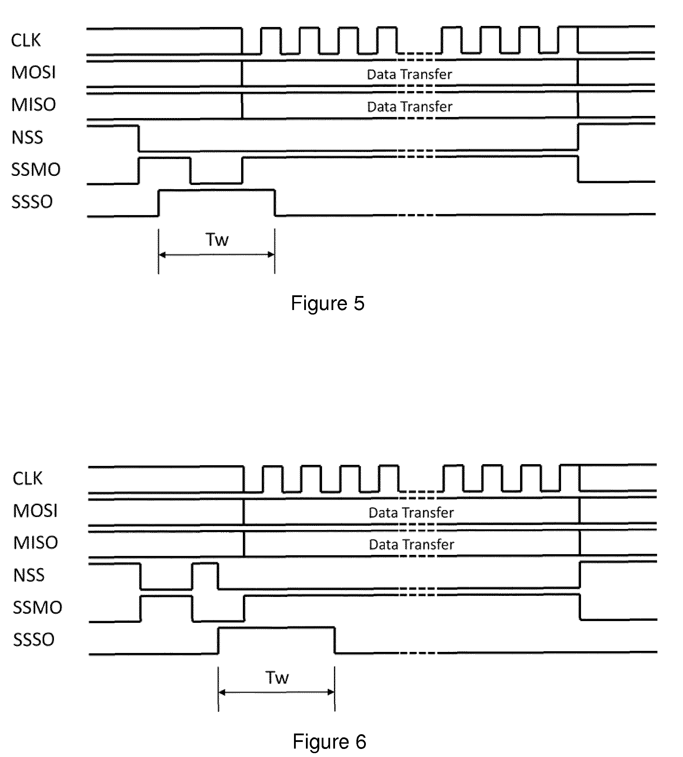

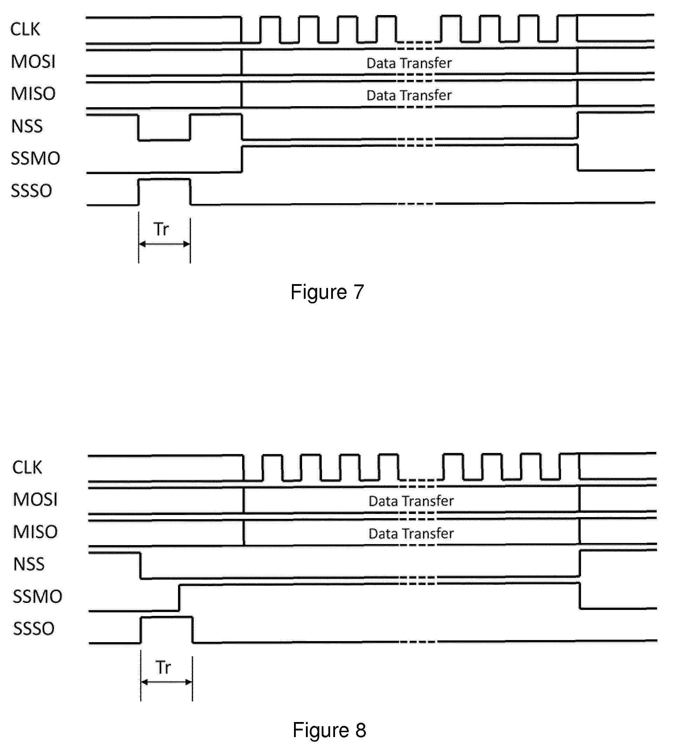

Now, we will detail different status of the slave device 250 that can be reported to the master device 200. A first status detailed with figures 3 and 4 is related to the report of a reception acknowledgement. A second status detailed with figure 5 and 6 is related to the report of a ready to receive data. And a third status detailed on figure 7 and 8 is related to a request of exchange from the slave device 250.

Figure 3 is a first embodiment showing a first method for reporting an acknowledgement of reception. In this case the acknowledgement of reception can be based on an event that could be either a filling of an input buffer beyond a predetermined level or a processing of a command that is pending. On this figure 3, the start of the data exchange is made as indicated on prior art. The master device 200 indicates the start of the transfer by activating signal SSMO that activates selection signal NSS, then the clock signal CLK for sampling the data exchange. During the exchange, an input buffer of the slave device 250 connected data input MOSI is filled with the data. During the reception, the event occurs so the slave device 250 activates the signal SSSO that drives selection signal NSS at low level.

When the master device 200 has finished the data exchange, the signal SSMO is deactivated and the master device 200 can read that the logical value NSSMI is still at low level. So the master device 200 understands that slave device 250 is busy.

When the event of the slave device 250 is finished (the buffer is below the threshold or the command is processed) the signal SSSO can be deactivated and the selection signal NSS return to high level. At this moment, the master device 200 can read that the selection signal toggle to inactivated level and understands that the slave device 250 has acknowledged the receiving of data or the processing of the current command. In other words, the transition from low level to high level of the selection signal NSS reports to the master device 200 that the slave device 250 is now ready for receiving another exchange.

Figure 4 shows an alternative solution to figure 3, in which, instead of maintaining the selection signal NSS at low level, the data exchange is performed by the master device 200 as in prior art and the selection signal NSS return to high level at the end of transmission. But the master device 200 waits a feedback from the slave device 250. The slave device 250 monitors signal SSSI and will send a pulse signal when the event is finished but only after the return of selection signal NSS. The low level on the selection signal NSS can be detected by the master device 200 and interpreted as an acknowledgement of the transfer. In other words, the low level on NSS signal reports to the master device 200 that the slave device 250 is now ready for receiving another exchange.

Figure 5 and figure 6 show two examples of a second method for reporting a status of "ready to receive data". In this second, the master device 200 checks before any data exchange if the slave device 250 is ready before starting the exchange. When the master device 200 wants to send data, the signal SSMO is activated for a predetermined period of time and the selection signal NSS is driven to low level on the control of the master device 200 during said period of time. The slave device 250 seeing the selection signal understand that there is an exchange request. If the slave device 250 is ready for the exchange it can activate signal SSSO for signaling that the slave device 250 is ready for the exchange. Figure 5 corresponds to a case in which the slave device 250 reports it is ready without waiting the selection signal NSS returns to high level while figure 6 shows that the signaling of the slave device 250 could arrive after the return to high level. To be sure that the signaling of the slave device 250, it is important to activate signal SSSO during a time Tw higher than the period of time used by the master device 200 for requesting the attention of the slave device 250. The master device 200 detecting that the selection signal NSS is at low level while the signal SSMO is inactive after the period of time understand that the slave device 250 is ready and can immediately activate the signal SSMO and the clock signal for starting the data transfer. The transfer can then finish according prior art as shown on the figures 5 and 6 or as it is indicated in relation with figure 3 or 4.

A third method is related to the bus inversion for transfer request. In that case, the slave device 250 has a message to send to the master device 200. As shown on the figure 7 and 8, an active pulse is sent on signal SSSO for driving the selection signal NSS to low level during a period Tr. The master device 200 that do not wait a feedback from the slave device 250 understand that the slave device 250 request an exchange of data. Depending of its availability, the master device 200 can activates signal SSSO when available (figure 7) or immediately (figure 8) and the clock signal can start once the master is ready to transfer data. The transfer can then ends as in prior art or as indicated in relation with figure 3 or figure 4.

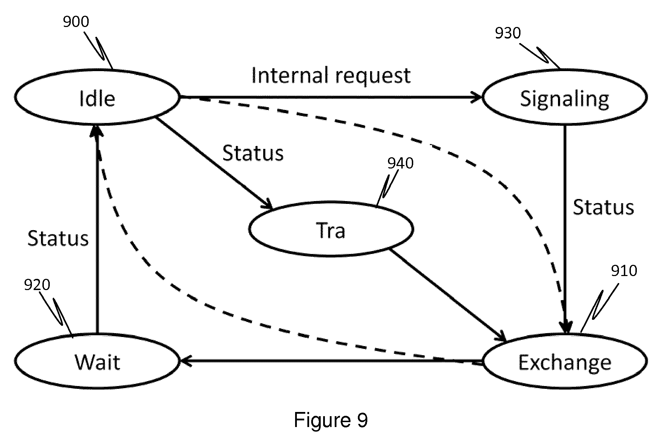

The three method can be used alone in combination with prior art or together. The figure 9 is an example of state machine on the master side showing how can be combined the different method and the prior art.

Prior art comprises only two states, the Idle state 900 and the Exchange state 910. The arrows in dotted line indicate the changes of state according prior art which are the decision by the master to exchange data for going into the Exchange state 910 and end of the data exchange for returning into the Idle state 900.

In relation with figures 3 and 4, it has been detailed the Wait state 920. After the end of a data exchange, the master toggle from Exchange 910 to Wait state 920. On the reception of a ready status from the slave device 250, the master device 200 can return to the Idle state 900.

In relation with figures 5 and 6, it has been disclosed the Signaling state 930. When the master device 200 has an internal request of exchange, it toggles in the Signaling state 930 which indicates that the master device 200 requests a data exchange. The master device 200 can start the Exchange state 910 only after the receiving of a ready status from the slave device 250.

In relation with figures 7 and 8, it has been disclosed the Slave Request state 940. When the master device 200 is in Idle state 900, the reception of status information toggles the master device 200 into the Slave request State 940. When ready for the exchange the master device 200 toggles into the Exchange state 910 and starts the data exchange with the slave device 250.

As indicated, the man of the art can use one, two or the three methods simultaneously. The use of Slave Request state 940 only is fully compatible with prior art but address only request of exchange from the slave device. The man of the art can understood that the Signaling state 930 and the Wait state 920 both address a same problem of availability in two different manner and it is not necessary to use these two state simultaneously, one can be bypass by the arrow of the prior art.

## Claims

1. A communication method for a system that comprises :
- a master device (200) comprising :
- a clock output for providing a clock signal,
- a master input for receiving a data signal (MISO),
- a master output for providing a data signal (MOSI),
- a master selection port for providing synchronization information (NSS),
- a slave device (250) comprising :
- a clock input for receiving a clock signal, which is connected to the clock output,
- a slave input for receiving a data signal (MOSI), the slave input being connected to the master output,
- a slave output for providing a data signal (MISO), the slave output being connected to the master input,
- a slave selection port for receiving synchronization information (NSS), the slave selection port being connected to the master selection port,
wherein the sending of data through master and slave output and the receiving of data through master and slave input can be perform when the master drives the master selection port (NSS) at low level while sending clock pulses on the clock signal (CLK) for sequencing the data exchange,
**characterized in that** the master and slave selection ports (NSS) are bi-directional tri-state ports linked together by a wire connected to at least one pull-up resistor (280), each of the master and slave selection port being capable to receive and to send synchronization information and wherein the slave device (250) can drive the slave selection port (NSS) to low level while the master selection port is in high impedance for signaling to the master a status of the slave.

2. The communication method of claim 1 wherein the status indicates the slave is ready after at least a first reception of command/data for receiving next command/data.

3. The communication method of claim 1 wherein the master selection port is driven low before a transmission for indicating to the slave that a command/data wait to be transmitted and wherein the status indicates the slave is ready for receiving the command/data.

4. The communication method of claim 1 wherein the status indicates to the master that the slave has a message to transmit.

5. A communication system that comprises :
- a master device (200) comprising :
- a clock output for providing a clock signal (CLK),
- a master input for receiving a data signal (MISO),
- a master output for providing a data signal (MOSI),
- a master selection port for providing synchronization information,
- a slave device (250) comprising :
- a clock input for receiving a clock signal (CLK), which is connected to the clock output,
- a slave input for receiving a data signal (MOSI), the slave input being connected to the master output,
- a slave output for providing a data signal (MISO), the slave output being connected to the master input,
- a slave selection port for receiving synchronization information, the slave selection port being connected to the master selection port,
wherein the sending of data through master and slave output and the receiving of data through master and slave input can be perform when the master drives the master selection port (NSS) at low level while sending clock pulses on the clock signal (CLK) for sequencing the data exchange,
**characterized in that** the master and slave selection ports (NSS) are bi-directional tri-state ports linked together by a wire connected to at least one pull-up resistor (280), each of the master and slave selection port being capable to receive and to send synchronization information and wherein the slave device (250) can drive the slave selection port (NSS) to low level while the master selection port is in high impedance for signaling a status of the slave to the master.

6. The communication system of claim 5 wherein each tri-state port of master an slave device (250) comprise an amplifier with an input connected to the wire for reading the logical level carried by the wire and an open drain output capable of driven low the logical value carried by the wire.

7. The communication system of claim 5 wherein the signaling is understood by the master when the low level is detected.

8. The communication system of claim 5 wherein the signaling is understood by the master when a transition from low level to high level is detected.

9. A master device (200) intended to communicate with a slave device (250), the master device (200) comprising :
- a clock output for providing a clock signal (CLK) to the slave device (250),
- a master input for receiving a data signal (MISO) from the slave device (250),
- a master output for providing a data signal (MOSI) to the slave device (250),
a master selection port for providing synchronization information to the slave device (250),
wherein the sending of data by the master output and the receiving of data by the master input can be perform when the master drives the master selection port (NSS) at low level while sending clock pulses on the clock signal (CLK) for sequencing the data exchange,
**characterized in that** the master selection ports (NSS) is a bi-directional tri-state port connected to at least one pull-up resistor (280), the master selection port (NSS) being capable to receive and to send synchronization information and wherein while the master selection port is high impedance level, the master selection port can receive information for signaling a status of the slave.

10. A slave device (250) intended to communicate with a master device (200), the slave device (250) comprising :
- a clock input for receiving a clock signal (CLK) from the master device (200),
- a slave input for receiving a data signal (MOSI) from the master device (200),
- a slave output for providing a data signal (MISO) to the master device (200),
- a slave selection port for receiving synchronization information from the master device (200),
wherein the sending by slave output and the receiving of data by the slave input can be perform when the selection port (NSS) is driven at low level by the master device (200) while receiving clock pulses on the clock signal (CLK) for sequencing the data exchange,
**characterized in that** the slave selection port (NSS) is bi-directional tri-state port connected to at least one pull-up resistor (280), the slave selection port being capable to drive the slave selection port (NSS) to low level for signaling a status of the slave to the master.
